# EUROPÄISCHE PATENTSCHRIFT

(11) **EP 2 154 625 B1**
(45) Veröffentlichungstag und Bekanntmachung des Hinweises auf die Patenterteilung: **04.01.2017**
(21) Anmeldenummer: 09010334.2
(22) Anmeldetag: 11.08.2009
(51) Int. Cl.: G06F 21/33, H04L 29/06, G06F 21/34, G06Q 20/38, G06F 21/44, G07F 7/10, H04L 9/32

(54) **SICHERE PERSONALIERUNG EINES EINMALPASSWORT-GENERATORS**
SECURE PERSONALISATION OF A ONE-TIME-PASSWORD GENERATOR
PERSONALISATION SECURISÉE D'UN GÉNÉRATEUR DE MOT DE PASSE A UTILISATION UNIQUE

(30) Priorität: 14.08.2008 DE 102008037794
(43) Veröffentlichungstag der Anmeldung: 17.02.2010
(60) Teilanmeldung: 11003948.4
(73) Patentinhaber: Giesecke & Devrient GmbH, 81677 München (DE)
(72) Erfinder: Krysiak, Ralph, 85570 Markt Schwaben (DE)

(56) Entgegenhaltungen:
- EP-A- 0 566 811
- EP-A- 1 211 841
- EP-A1- 1 713 230
- WO-A-2007/126763
- WO-A1-2005/116909
- DE-C2- 3 927 270
- US-A- 5 432 851
- US-A1- 2004 148 510
- OPPLIGER R ET AL: "SSL/TLS Session-Aware User Authentication" COMPUTER, IEEE SERVICE CENTER, LOS ALAMITOS, CA, US, Bd. 40, Nr. 3, 1. März 2008 (2008-03-01), Seiten 59-65, XP011206550 ISSN: 0018-9162

## Beschreibung

Die Erfindung betrifft ein Verfahren zum Personalisieren eines Einmalpasswort-Generators sowie einen entsprechenden Einmalpasswort-Generator. Ein Einmalpasswort (auch "OTP" genannt, vom engl. "One Time Password") ist ein Passwort oder allgemeiner ein Datensatz, der zum einmaligen Authentisieren eines Nutzers oder eines Systems für eine Datenkommunikation benutzt wird. Einmalpasswörter werden beispielsweise benutzt, um Transaktionen beim Online-Banking zu verschlüsseln. Ein Einmalpasswort hat, wie der Begriff bereits andeutet, nur für eine Authentisierung Gültigkeit und kann danach nicht mehr verwendet werden, so dass ein Nutzer beispielsweise für jede neue Überweisung über ein Online-Banking-System ein neues Einmalpasswort benötigt.

Neben der Möglichkeit, eine Reihe von Einmalpasswörtern vorab zu erzeugen und dem Nutzer auszuhändigen, wie z.B. bei den aus dem Online-Banking bekannten Transaktionsnummern-Listen, ist es auch bekannt, einen Nutzer mit einem Gerät zum Erzeugen und gegebenenfalls Anzeigen von Einmalpasswörtern, einem so genannten Einmalpasswort-Generator bzw. OTP-Generator, auszustatten. OTP-Generatoren sind meist als kleine, handliche Geräte ausgebildet, beispielsweise als Chipkarten, und können daher von einem Nutzer einfach mitgeführt werden. Derartige OTP-Generatoren bergen bei Verlust weniger Gefahren als Listen von vorab generierten Einmalpasswörtern, da OTP-Generatoren zusätzlich gesichert werden können, beispielsweise durch ein Passwort oder dergleichen.

Um einen Authentisierungsvorgang zusätzlich gegen Angriffe zu sichern, beispielsweise gegen einen so genannten "Man in the Middle"-Angriff, bei dem ein Angreifer die Datenkommunikation zwischen zwei Parteien abhört und sich jeweils gegenüber der einen Partei als die jeweils andere Partei ausgibt, ist es bekannt, Einmalpasswörter, die beispielsweise in "Challenge-Response"-Verfahren auf Client-Seite zum Verschlüsseln eines von einem Server erhaltenen Datensatzes, der "Challenge", benutzt werden, abhängig von dem zu verschlüsselnden Datensatz zu erzeugen. Dazu muss einem eingesetzten OTP-Generator dieser Datensatz eingegeben werden. Dies kann manuell durch den Nutzer geschehen, beispielsweise über eine Tastatureingabe, oder über eine Kopplung des OTP-Generators mit einem an der Datenkommunikation beteiligten Kommunikationsgerät, beispielsweise einem Personal Computer (PC), wozu jedoch meist eine spezielle Installation des OTP-Generators in dem den PC steuernden System notwendig ist. Deshalb ist es wünschenswert, einen OTP-Generator bereitzustellen, der in verschiedenen Umgebungen direkt einsetzbar ist, also beispielsweise ohne vorausgehende Installation in einem zu benutzenden System, und für den Nutzer einfach zu bedienen ist, also beispielsweise ohne fehlerträchtige manuelle Eingabe von Datensätzen.

Die EP 1211841 B1 offenbart ein Gerät zum elektronischen Signieren von Daten, welches eine optische Eingabeeinheit zum Auslesen von zu signierenden Daten von einem Bildschirm oder dergleichen umfasst sowie eine Tastatur zur Interaktion mit einem Nutzer, eine Signiereinheit zum Signieren der aufgenommenen Daten und eine Anzeigeeinheit zum Anzeigen ausgelesener wie auch signierter Daten.

DE 39 27 270 C2 offenbart ein Verfahren zum Personalisieren einer Chipkarte. Bei dem Verfahren wird ein Teilnehmername und ein individueller Schlüssel in die Chipkarten abgespeichert und der Teilnehmername wird in einem gesicherten Bereich in einem Register abgelegt und die Chipkarten danach ausgeliefert. Im gesicherten Bereich wird anstelle des Teilnehmernamens ein Pseudoname in die Chipkarte eingetragen. In einer Kartenausgabestelle wird vor der Kartenausgabe der Pseudoname in der Chipkarte mit dem Teilnehmernamen überschrieben. Über eine gegen Abhören und Verändern von zu übertragenden Daten gesicherte Kommunikationsverbindung zwischen der Kartenausgabestelle und dem gesicherten Bereich werden der Pseudoname und der Teilnehmername verschlüsselt zum gesicherten Bereich übertragen. In einem Register des gesicherten Bereiches wird der

Teilnehmername zum Pseudonamen zugeordnet gespeichert. Nach einer Rückmeldung vom gesicherten Bereich zur Kartenausgabestelle erfolgt dort die Ausgabe der personalisierten Chipkarte.

WO 2007/126763 A2 offenbart ein zeit- und ereignisbasiertes Passwort. Ein System und Verfahren zum Erzeugen eines One Time Password (OTP), basierend auf einem Wert TEC, der sich basierend sowohl auf einem Ereignis als auch durch den Ablauf der Zeit verändern kann. Das OTP kann auf einem Token berechnet und an einen Verifizierer gesendet werden. Der Verifizierer speichert alle oder nur einen Teil der Parameter, die notwendig sind um einen oder mehrere OTFs, einschliesslich TEC, zu berechnen. Der TEC Wert kann zwischen dem Token und dem Verifizierer synchronisiert werden.

EP 0 566 811 A1 offenbart ein Authentisierungsverfahren und -System mit einer Smartcard. Es bezieht sich auf eine neue Smartcard-basierte Authentisierungstechnik unter Verwendung einer Smartcard, welche die auf der Karte dargestellte Zeit kryptographisch verschlüsselt. Ein Rechner empfängt als Eingabe bestimmte Werte, welche den Benutzer definieren, die Karte und einen bestimmten Wert, der von der verschlüsselten Zeit abgeleitet ist, und verschlüsselt und/oder überträgt diese Werte an einen Server. Der Server berechnet aus den empfangenen Werten einige potentielle Werte und vergleicht diese mit anderen empfangenen Werten. Sobald der Server eine Übereinstimmung feststellt, wird ein Akzeptanzsignal an den Rechner ausgegeben.

Vor einem ersten Einsatz eines OTP-Generators muss dieser jedoch auf einen bestimmten Nutzer personalisiert werden, d.h. eindeutig mit Kennungsdaten des Nutzers in Verbindung gebracht werden, um von einem Anwendungssystem, mit welchem der Nutzer kommuniziert (also beispielsweise einem Online-Banking-System), als OTP-Generator dieses Nutzers erkannt zu werden. Dies kann z.B. durch Einbringen von nutzerspezifischen Daten in den OTP-Generator erfolgen, welche gleichzeitig auf dem Anwendungssystem mit dem Nutzer verknüpft sind, beispielsweise ein eindeutig dem Nutzer zugeordneter geheimer Schlüssel.

Eine solche Personalisierung eines OTP-Generators bereits während dessen Herstellung erfordert jedoch hohe und damit kostenintensive Sicherheitsmaßnahmen, da die nutzerspezifischen geheimen Schlüssel kryptographisch gesichert in den entsprechenden OTP-Generator eingebracht werden müssen. Wird die Personalisierung erst nach Auslieferung des OTP-Generators durch dessen Nutzer durchgeführt, so birgt dies weitere Sicherheitsrisiken, beispielsweise durch den notwendigen Austausch von Personalisierungsdaten mit dem Anwendungssystem oder auf einem System des Nutzers befindlichen Schadcode.

Demzufolge ist es die Aufgabe der vorliegenden Erfindung, eine sichere und einfache Personalisierung eines OTP-Generators auf einen Nutzer vorzuschlagen.

Diese Aufgabe wird durch ein Verfahren und einen OTP-Generator mit den Merkmalen der unabhängigen Ansprüche gelöst. In davon abhängigen Ansprüchen werden vorteilhafte Ausgestaltungen und Weiterbildungen angegeben.

Erfindungsgemäß empfängt das Anwendungssystem zumindest Kennungsdaten des Nutzers und Identifikationsdaten des OTP-Generators, die jeweils den Nutzer und den OTP-Generator eindeutig identifizieren. Daneben kann das Anwendungssystem aber auch weitere Daten empfangen. Aus einer Teilmenge oder sämtlichen empfangenen Daten bildet das Anwendungssystem daraufhin mittels eines auf dem Anwendungssystem vorliegenden ersten geheimen Schlüssels erste verschlüsselte Daten und sendet zumindest diese ersten verschlüsselten Daten an den OTP-Generator, der diese empfangenen verschlüsselten Daten mittels des auch auf dem OTP-Generator vorliegenden ersten geheimen Schlüssels verifiziert. Zusammen mit diesen ersten verschlüsselten Daten kann das Anwendungssystem auch weitere Daten an den OTP-Generator senden.

Sofern die ersten verschlüsselten Daten von dem OTP-Generator erfolgreich verifiziert werden konnten, bildet dieser zweite verschlüsselte Daten aus von dem Anwendungssystem empfangenen Daten mittels eines auf dem OTP-Generator vorliegenden zweiten geheimen Schlüssels. Zumindest diese zweiten verschlüsselten Daten werden dann zurück an das Anwendungssystem gesendet und von dem Anwendungssystem mittels des zweiten geheimen Schlüssels, der ebenfalls auf dem Anwendungssystem vorliegt, verifiziert.

Sofern die zweiten verschlüsselten Daten von dem Anwendungssystem erfolgreich verifiziert werden konnten, führt das Anwendungssystem die eigentliche Personalisierung des OTP-Generators auf den Nutzer durch, indem die Kennungsdaten des Nutzers und die Identifikationsdaten des OTP-Generators verknüpft werden.

Das Anwendungssystem leitet im Rahmen der oben geschilderten Personalisierung den ersten geheimen Schlüssel mittels eines dem Anwendungssystem vorliegenden ersten geheimen Hauptschlüssels und den zweiten geheimen Schlüssel mittels eines dem Anwendungssystem vorliegenden zweiten geheimen Hauptschlüssels jeweils aus den anfangs empfangenen Identifikationsdaten des OTP-Generators ab.

Auf diese Weise ist es möglich, den OTP-Generator einfach und sicher auf den Nutzer zu personalisieren. Da bei der Herstellung keine nutzerspezifischen Daten in den OTP-Generator eingebracht werden müssen, kann dieser einerseits ohne größere Sicherheitsanforderungen hergestellt werden, weil zum Herstellungszeitpunkt noch nicht festzustehen braucht, an welchen Nutzer der jeweilige OTP-Generator ausgeliefert wird. Auch eine Auslieferung an den Nutzer ist problemlos und ohne großen logistischen Aufwand möglich, da ein OTP-Generator mit beliebigen Identifikationsdaten an jeden potentiellen Nutzer ausgeliefert werden kann, ohne dass eine bereits bestehende Bindung des Nutzers an die Identifikationsdaten zu beachten wäre.

Da andererseits auch zu keinem späteren Zeitpunkt ein Einbringen von nutzerspezifischen Daten in den OTP-Generator, beispielsweise durch Einspielen, Herunterladen oder dergleichen, notwendig ist, ist ein böswilliger Zugriff auf etwaige geheime Personalisierungsdaten grundsätzlich ausgeschlossen.

Das Anwendungssystem kann beim Empfangen der Identifikationsdaten den ersten und zweiten geheimen Schlüssel mittels der entsprechenden Hauptschlüssel ableiten, muss also erst zum Zeitpunkt der Personalisierung des OTP-Generators Daten speichern, die zur Personalisierung des OTP-Generators auf den Nutzer benötigt werden. Eine Verknüpfung der Identifikationsdaten des OTP-Generators mit bereits vor dem Personalisierungsvorgang in dem Anwendungssystem vorliegenden Kennungsdaten des Nutzers ist dazu ausreichend. Das Senden der Kennungsdaten des Nutzers an das Anwendungssystem dient dazu, dem Anwendungssystem anzuzeigen, für welchen der dem Anwendungssystem bereits bekannten Nutzer der OTP-Generator personalisiert werden soll. Noch nicht personalisierte, aber bereits hergestellte und ausgelieferte OTP-Generatoren belasten somit das Anwendungssystem in keiner Weise, da für diese im Anwendungssystem bis zu diesem Zeitpunkt keinerlei Daten gespeichert werden müssen.

Auf Seiten des OTP-Generators werden die ersten verschlüsselten Daten, die gebildet werden, indem das Anwendungssystem von dem OTP-Generator empfange Daten verschlüsselt und an den OTP-Generator sendet, verifiziert. Dadurch wird festgestellt, ob der Kommunikationspartner, der sich während des Personalisierungsvorgangs als das Anwendungssystem ausgibt, auch tatsächlich das Anwendungssystem ist, da nur das Anwendungssystem im Besitz des ersten geheimen Schlüssels sein kann.

Umgekehrt kann das Anwendungssystem in gleicher Weise sicherstellen, dass sein Kommunikationspartner tatsächlich der sich mit den Identifikationsdaten identifizierende OTP-Generator ist, indem an den Kommunikationspartner gesendete und von diesem verschlüsselt zurückgesendete Daten mit dem zweiten geheimen Schlüssel verifiziert werden. Eine solche Verifikation ist nur dann erfolgreich, wenn der Kommunikationspartner im Besitz des zweiten geheimen Schlüssels ist, es sich also genau um den OTP-Generator handelt. Nur dann wird von dem Anwendungssystem die Verknüpfung von Kennungsdaten des Nutzers, beispielsweise eines Nutzernamens in Verbindung mit einem Passwort, mit den Identifikationsdaten des OTP-Generators, beispielsweise einer eindeutigen Seriennummer, hergestellt. Das Anwendungssystem kann beispielsweise ein Online-Banking-System oder dergleichen sein.

Mit diesem Verfahren wird vorzugsweise der nachfolgend beschriebene OTP-Generator personalisiert. Ein solcher zu personalisierender OTP-Generator umfasst einen Prozessor und einen Speicher mit zumindest einem ersten und einem zweiten geheimen Schlüssel, die darin gespeichert sind. Eine optische Eingabeeinrichtung dient zum Auslesen von auf einer Monitoreinrichtung eines Kommunikationsgeräts angezeigten Daten. Das Kommunikationsgerät dient als Schnittstelle zwischen dem OTP-Generator und dem Anwendungssystem, bei welchem der OTP-Generator für einen Nutzer personalisiert wird. Eine Anzeigeeinrichtung dient dem OTP-Generator zum Anzeigen von Daten und eine Verifikationseinrichtung zum Vergleich von Vergleichsdaten mit in dem Speicher vorliegenden Referenzdaten. Mittels einer Kryptographieeinrichtung verschlüsselt und entschlüsselt der OTP-Generator Daten mittels des ersten und des zweiten geheimen Schlüssels. Im Rahmen des geschilderten Personalisierungsverfahrens entschlüsselt die Kryptographieeinrichtung des OTP-Generators die mit der optischen Eingabeeinrichtung ausgelesenen und von dem Anwendungssystem empfangenen ersten verschlüsselten Daten und legt diese zur Verifikation durch die Verifikationseinrichtung als Vergleichsdaten im Speicher ab. Die Kryptographieeinrichtung verschlüsselt die ersten verschlüsselten Daten auch mittels des zweiten geheimen Schlüssels, um diese als zweite verschlüsselte Daten auf der Anzeigeeinrichtung anzuzeigen. Die zweiten verschlüsselten Daten werden schließlich von dem Anwendungssystem verifiziert. Somit besitzt der OTP-Generator alle notwendigen Komponenten um mittels des vorstehend beschriebenen Verfahrens für einen Nutzer bei einem Anwendungssystem personalisiert zu werden.

Dieser OTP-Generator ist nicht direkt mit dem Anwendungssystem verbunden, sondern nutzt zum Datenaustausch mit dem Anwendungssystem ein mit diesem verbundenes Kommunikationsgerät als Schnittstelle. Das Kommunikationsgerät, beispielsweise ein PC, sendet für das Anwendungssystem bestimmte Daten des OTP-Generators an das Anwendungssystem und empfängt für den OTP-Generator bestimmte und von dem Anwendungssystem gesendete Daten. Der OTP-Generator ist also nicht physikalisch mit einem Netzwerk verbunden, wodurch die in dem OTP-Generator gespeicherten und erzeugten Daten zusätzlich gegen einen böswilligen Zugriff gesichert sind.

Bevorzugt werden die von dem Kommunikationsgerät empfangenen und für den OTP-Generator bestimmten Daten des Anwendungssystems auf einer Monitoreinrichtung des Kommunikationsgeräts, beispielsweise einem Flüssigkristallbildschirm oder dergleichen, angezeigt und mittels der optischen Eingabeeinrichtung des OTP-Generators von der Monitoreinrichtung ausgelesen. Auf diese Weise wird vermieden, dass der Nutzer Daten von Hand, beispielsweise über eine Tastatur, in den OTP-Generator eingeben muss, wodurch Zeit eingespart und Fehlerquellen vermindert werden. Der OTP-Generator muss auch nicht in dem das Kommunikationsgerät steuernden System installiert werden, da die Datenübertragung zwischen dem OTP-Generator und dem Kommunikationsgerät rein optisch stattfindet und keine zusätzlichen Kommunikationsapplikationen benötigt werden. Dadurch ist der OTP-Generator bei beliebigen Kommunikationsgeräten unmittelbar und problemlos einsetzbar.

Als optische Eingabeeinrichtung des OTP-Generators kann ein CCD-Zeilensensor ("Charge-Coupled Device", ladungsgekoppeltes Gerät) zum Auslesen von Daten eingesetzt werden, welche auf der Monitoreinrichtung beispielsweise als Laufschrift angezeigt werden, etwa mittels Flash animiert oder als dynamischer HTML-Inhalt. Auch ein optisch eindimensionaler Sensor, beispielsweise eine Photodiode, kann als optische Eingabeeinrichtung verwendet werden. In diesem Fall werden die Daten als binäre Daten und entsprechend codiert über einen entsprechend hell-dunkel gesteuerten Bereich der Monitoreinrichtung angezeigt. Zur Erhöhung der Datenübertragungsrate können parallel eine Mehrzahl von Photodioden verwendet werden.

Daten, die von dem OTP-Generator zu dem Anwendungssystem übertragen werden, werden über eine Anzeigeeinrichtung des OTP-Generators, beispielsweise ein Display, angezeigt und über eine Eingabeeinrichtung, beispielsweise eine Tastatur, dem Kommunikationsgerät zum Senden an das Anwendungssystem bereitgestellt. Auf diese Weise ist eine physikalische Kopplung des OTP-Generators mit dem Anwendungssystem nicht notwendig. Die Anzeigeeinrichtung kann weiterhin dazu dienen, über die vorstehend beschriebene optische Eingabeeinrichtung ausgelesene Daten zur Kontrolle anzuzeigen.

In einer bevorzugten Ausführungsform des erfindungsgemäßen Verfahrens sind der erste geheime Schlüssel und der zweite geheime Schlüssel voneinander verschiedene kryptographische Schlüssel und der erste geheime Hauptschlüssel und der zweite geheime Hauptschlüssel sind ebenfalls voneinander verschiedene kryptographische Hauptschlüssel und die zweiten verschlüsselten Daten werden gebildet, indem die von dem OTP-Generator empfangenen und mit dem ersten geheimen Schlüssel verschlüsselten ersten verschlüsselten Daten mittels des zweiten geheimen Schlüssels erneut verschlüsselt werden. Auf diese Weise wird das Personalisierungsverfahren einfach gehalten, da keine zusätzlichen Datensätze gespeichert und bearbeitet werden müssen.

Hierbei ist der zweite geheime Schlüssel vorzugsweise ein eindeutig nur genau dem OTP-Generator zugeordneter Schlüssel, während der erste geheime Schlüssel beispielsweise für die Kommunikation des Anwendungssystems mit einer Vielzahl von verschiedenen OTP-Generatoren verwendet werden kann, da der erste geheime Schlüssel, wie vorstehend beschrieben, im Wesentlichen zur Authentisierung des Anwendungssystem gegenüber dem OTP-Generator dient.

Es ist jedoch auch möglich, das Personalisierungsverfahren mit nur einem geheimen Schlüssel, der dann natürlich für jeden OTP-Generator individuell und verschieden sein muss, durchzuführen, d.h., der erste geheime Schlüssel und der zweite geheime Schlüssel können auch identische kryptographische Schlüssel sein und der erste geheime Hauptschlüssel und der zweite geheime Hauptschlüssel können auch identische kryptographische Hauptschlüssel sein. Es ist dann beispielsweise möglich, die zweiten verschlüsselten Daten durch Verschlüsseln von durch den OTP-Generator von dem Anwendungssystem empfangenen unverschlüsselten Daten mittels des kryptographischen Schlüssels zu bilden.

Die den OTP-Generator identifizierenden Identifikationsdaten sind vorzugsweise in dessen Speicher abgelegt und können auf der Anzeigeeinrichtung des OTP-Generators angezeigt werden. Die Identifikationsdaten können aber auch, beispielsweise in Form einer Seriennummer, äußerlich auf den OTP-Generator ablesbar aufgebracht sein, beispielsweise aufgedruckt.

Nach Empfang der Identifikationsdaten durch das Anwendungssystem kann dieses die ersten verschlüsselten Daten aus den Identifikationsdaten bilden. Vorzugsweise werden die ersten verschlüsselten Daten jedoch durch Verschlüsseln einer von dem OTP-Generator erzeugten Pseudozufallszahl mittels des ersten geheimen Schlüssels gebildet, die der OTP-Generator zusätzlich zu den Identifikationsdaten an das Anwendungssystem überträgt. Zu diesem Zweck kann der OTP-Generator einen Zufallsgenerator zum Erzeugen der Pseudozufallszahl umfassen.

Die erzeugte Pseudozufallszahl kann dann als Referenzdaten für einen späteren Vergleich mit Vergleichsdaten durch die Verifikationseinrichtung in dem Speicher gespeichert und auf der Anzeigeeinrichtung angezeigt werden. Die Verifikationseinrichtung des OTP-Generators vergleicht dann die von der Kryptographieeinrichtung entschlüsselten ersten verschlüsselten Daten als Vergleichsdaten mit in dem Speicher abgelegten Referenzdaten und sendet bei Übereinstimmung ein Verifikationssignal an die Kryptographieeinrichtung, welche erst bei Empfang dieses Verifikationssignals die ersten verschlüsselten Daten mittels des zweiten geheimen Schlüssels verschlüsselt.

Es ist aber auch möglich, dass die Verifikationseinheit den Vergleich der ersten verschlüsselten Daten mit den gespeicherten Referenzdaten durchführt, ohne dass die ersten verschlüsselten Daten dazu entschlüsselt worden sind. In diesem Fall repräsentieren die in dem Speicher gespeicherten Referenzdaten die ersten verschlüsselten Daten selbst, die der OTP-Generator zu Vergleichszwecken bilden kann, da er ja selbst auch im Besitz des ersten geheimen Schlüssels ist.

Der OTP-Generator ist in einer bevorzugten Ausführungsform als Chipkarte ausgebildet und ist als solche vom Nutzer stets einfach mitzuführen. Zusammen mit dem Anwendungssystem und einem mit diesem verbundenen Kommunikationsgerät, das in der geschilderten Weise mit dem OTP-Generator kommunizieren kann, bildet der OTP-Generator ein Personalisierungssystem, das den OTP-Generator in der oben beschriebenen Weise personalisiert.

Die Erfindung wird im Folgenden mit Bezug auf die begleitenden Zeichnungen beispielhaft erläutert. Darin zeigen:
- Figur 1: schematisch eine bevorzugte Ausführungsform eines erfindungsgemäßen OTP-Generators;
- Figur 2: schematisch Komponenten eines Personalsierungssystems; und
- Figur 3: schematisch die Schritte einer bevorzugten Ausführungsform des erfindungsgemäßen Personalisierungsverfahrens.

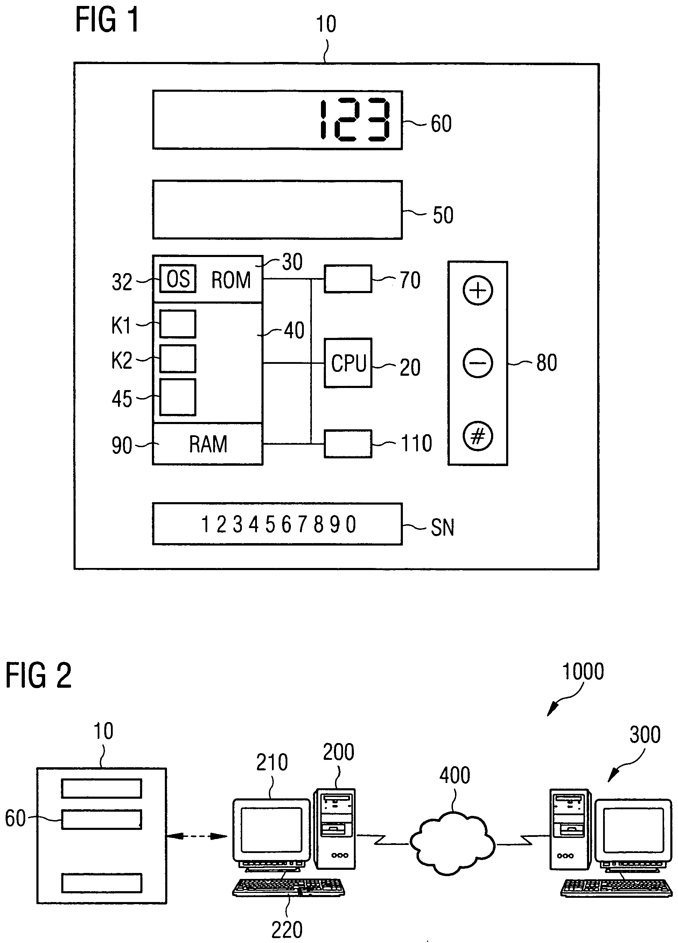

Mit Bezug auf Figur 1 umfasst ein OTP-Generator 10 einen Prozessor (CPU) 20, einen nichtflüchtigen, nicht wiederbeschreibaren ROM-Speicher 30, in dem der Kern des den OTP-Generator 10 steuernden Betriebssystems (OS) 32 gespeichert ist, einen nichtflüchtigen, wiederbeschreibbaren Speicher 40 und einen flüchtigen Arbeitsspeicher (RAM) 90. In dem Speicher 40 können Daten, wie z.B. die nachstehend beschriebenen geheimen Schlüssel K1 und K2, und Applikationen, wie z.B. die nachstehend beschriebene Verifikationsapplikation, gespeichert sein. Es ist auch möglich, die Schlüssel K1 und K2 und Applikationen in dem ROM-Speicher 30 zu speichern oder das Betriebssystem 32 oder zumindest Systemroutinen in dem Speicher 40. Ein zusätzlicher Kryptoprozessor dient einem effektiven Verschlüsseln und Entschlüsseln von Daten. Diese Aufgaben können auch durch eine Kryptographieapplikation, die in einem der Speicher 30 oder 40 gespeichert und auf dem Prozessor 20 ausführbar ist, ausgeführt werden.

Die geheimen Schlüssel K1 und K2 dienen zur verschlüsselten Kommunikation mit einem nachstehend beschriebenen Anwendungssystem. Es ist auch möglich, diese Kommunikation sicher nur mit einem geheimen Schlüssel K durchzuführen. Der geheime Schlüssel K2 (bzw. der eine geheime Schlüssel K) ist eindeutig dem OTP-Generator 10 zugeordnet. Keine zwei OTP-Generatoren verfügen über identische Schlüssel K2 (bzw. K). Der Schlüssel K2 dient dem OTP-Generator 10 im Wesentlichen dazu, sich gegenüber dem Anwendungssystem 300 zu authentisieren, indem er von dem Anwendungssystem 300 erhaltene Daten mit diesem Schlüssel K2 verschlüsselt und damit seine Identität über den Besitz des Schlüssels K2 eindeutig nachweist. Der geheime Schlüssel K1 hingegen kann für eine Mehrzahl von OTP-Generatoren 10 identisch eingesetzt werden, da er dem Anwendungssystem dient, sich in analoger Weise gegenüber einem solchen OTP-Generator zu authentisieren.

Die Kryptographieeinrichtung 70 nimmt Daten auf, die über eine optische Eingabeeinrichtung 50 ausgelesen worden sind. Solche Daten werden dann, je nach Anwendungszusammenhang, mittels des Schlüssels K1 entschlüsselt in dem Speicher 40 als Vergleichsdaten gespeichert und optional an eine Anzeigeeinrichtung 60 zum Anzeigen weitergegeben oder mittels des Schlüssels K2 erneut verschlüsselt und ebenfalls zum Anzeigen weitergeleitet. Die Kryptographieeinrichtung 70 kann weiterhin dazu dienen, OTP-Generatorinterne Daten zu verschlüsseln und als Referenzdaten in dem Speicher 40 zu speichern, beispielsweise Daten, die anschließend an ein Anwendungssystem gesendet werden sollen.

Die Verifikationsapplikation 45 vergleicht als Verifikationseinrichtung empfangene und gespeicherte Vergleichsdaten mit in dem Speicher 40 gespeicherten Referenzdaten. Vergleichsdaten sind dabei immer Daten, die von außen von einem anderen Kommunikationspartner kommend in den OTP-Generator 10, verschlüsselt oder im Klartext, eingebracht worden sind. Referenzdaten sind in der Regel Daten, die durch den OTP-Generator 10 selbst erzeugt worden sind. Auch diese können verschlüsselt oder im Klartext vorliegen.

Ein Verifikationsvorgang in dem OTP-Generator 10 folgt immer einem bestimmten Muster: Der OTP-Generator 10 stellt Daten bereit, die an ein Anwendungssystem gesendet werden sollen, beispielsweise eine Pseudozufallszahl RAND. Einem vorgeschriebenen Kommunikationsprotokoll folgend erwartet der OTP-Generator 10 als Antwort von dem Anwendungssystem, dass die gesendete Pseudozufallszahl RAND mittels des ersten Schlüssels K1 verschlüsselt an den OTP-Generator 10 zurückgesendet wird. Die auf diese Weise empfangenen Daten bilden Vergleichsdaten. Falls RAND selbst als Referenzdatum gespeichert worden ist, werden die empfangenen verschlüsselten Daten mittels der Kryptographieeinrichtung 70 und des Schlüssels K1 entschlüsselt und entschlüsselt als Vergleichsdaten gespeichert. Falls als Referenzdatum die mittels K1 verschlüsselte Pseudozufallszahl RAND gespeichert worden ist, werden die empfangenen Daten selbst als Vergleichsdaten gespeichert. In jedem der beiden Fälle kann die Verifikationsapplikation 45 durch Vergleichen der Vergleichsdaten mit den Referenzdaten eindeutig feststellen, ob der sich aktuell als das Anwendungssystem ausgebende Kommunikationspartner über den Schlüssel K1 verfügt, nämlich genau dann, wenn Vergleichsdaten und Referenzdaten übereinstimmen.

Um die Kommunikation mit dem Anwendungssystem gemäß dem vorbestimmten Protokoll fortzusetzen, werden die von dem Anwendungssystem empfangenen ersten verschlüsselten Daten mittels der Kryptographieeinrichtung 70 mittels des Schlüssels K2 verschlüsselt. Die Verifikationseinrichtung 45 kann bei erfolgreicher Verifikation ein Verifikationssignal an die Kryptographieeinrichtung 70 senden, um diesen Verschlüsselungsprozess anzustoßen.

Die bereits erwähnte Anzeigeeinrichtung 60 des OTP-Generators 10 in Form eines Displays dient dem Anzeigen von Daten, die in einem der Speicher 30, 40 gespeichert sind, mittels eines der Prozessoren 20, 70 erzeugt oder über eine optische Eingabeeinrichtung 50 in den OTP-Generator 10 eingebracht worden sind. Die optische Eingabeeinrichtung 50 ist als CCD-Zeilensensor ausgebildet. Auch optisch eindimensionale Sensoren, beispielsweise Photodioden, sind zu diesem Zweck einsetzbar. Mittels der optischen Eingabeeinrichtung 50 können Daten, beispielsweise von einem Monitor eines externen Geräts, ausgelesen werden. Eine spezielle Kopplung des OTP-Generators 10 mit dem externen Gerät oder eine Installation des OTP-Generators 10 bei einem Betriebssystem des externen Geräts ist nicht notwendig. Es reicht aus, dass die optische Eingabeeinrichtung 50 räumlich geeignet in Relation zu dem Monitor des externen Geräts angeordnet wird, damit ein optisches Auslesen von Daten, die auf dem Monitor, beispielsweise als Laufschrift (Flashanimiert oder als dynamischer HTML-Inhalt), zum Auslesen für einen Zeilensensor, oder schlicht binär codiert in einem oder mehreren Hell-Dunkel gesteuerten Bereichen zum Auslesen für eine oder mehrere Photodioden, ausgegeben werden.

Der OTP-Generator 10 verfügt weiterhin optional über eine Tastatur 80 zum Erleichtern der Interaktion mit einem Nutzer. Beispielsweise kann der Nutzer mittels der Tastatur 80 das Erzeugen und Anzeigen einer Pseudozufallszahl RAND durch einen Zufallsgenerator 110 oder das Anzeigen von Identifikationsdaten des OTP-Generators auf der Anzeigeeinrichtung 60 initiieren. Der OTP-Generator 10 wird durch eine Seriennummer SN eindeutig identifiziert, die sichtbar äußerlich auf den OTP-Generator 10 aufgebracht worden ist, beispielsweise aufgedruckt oder eingeprägt.

Der OTP-Generator 10 ist in Form einer Chipkarte ausgebildet. Es ist auch möglich, eine andere Bauform zu wählen, beispielsweise als ein volumiges Token oder dergleichen.

Figur 2 stellt schematisch die Komponenten eines Personalisierungssystems 1000 dar. Der vorstehend beschriebene OTP-Generator 10 interagiert (gestrichelt dargestellt) mit einem Kommunikationsgerät 200, welches über eine Monitoreinrichtung 210 und eine Eingabeeinrichtung 220 verfügt. Das Kommunikationsgerät 200 kann beispielsweise ein PC sein mit einem Flüssigkristallmonitor als Monitoreinrichtung 210 und einer Tastatur als Eingabeeinrichtung 220. Aber beispielsweise auch ein Telekommunikationsendgerät mit einem Display und einer Tastatur ist als Kommunikationsgerät 200 einsetzbar.

Das Kommunikationsendgerät 200 ist mit einem Anwendungssystem 300 verbunden, beispielsweise über ein Netzwerk 400, z.B. dem Internet, oder über ein Mobilfunknetz, wobei der OTP-Generator 10 für einen Nutzer bei dem Anwendungssystem 300, beispielsweise einem Online-Banking-System, personalisiert wird.

Das Kommunikationsgerät 200 dient im Wesentlichen dazu, Daten des OTP-Generators 10, die für das Anwendungssystem 300 bestimmt sind, aufzunehmen und an das Anwendungssystem zu senden. Solche Daten können dem Kommunikationsgerät 200 über die Tastatur 220 bereitgestellt werden. Weiterhin empfängt das Kommunikationsgerät 200 Daten von dem Anwendungssystem 300, die für den OTP-Generator 10 bestimmt sind und zeigt diese mittels des Monitors 210 an. Von diesem Monitor 210 können die entsprechenden Daten wie vorstehend beschrieben durch den OTP-Generator 10 mittels der optischen Eingabeeinrichtung 50 ausgelesen werden.

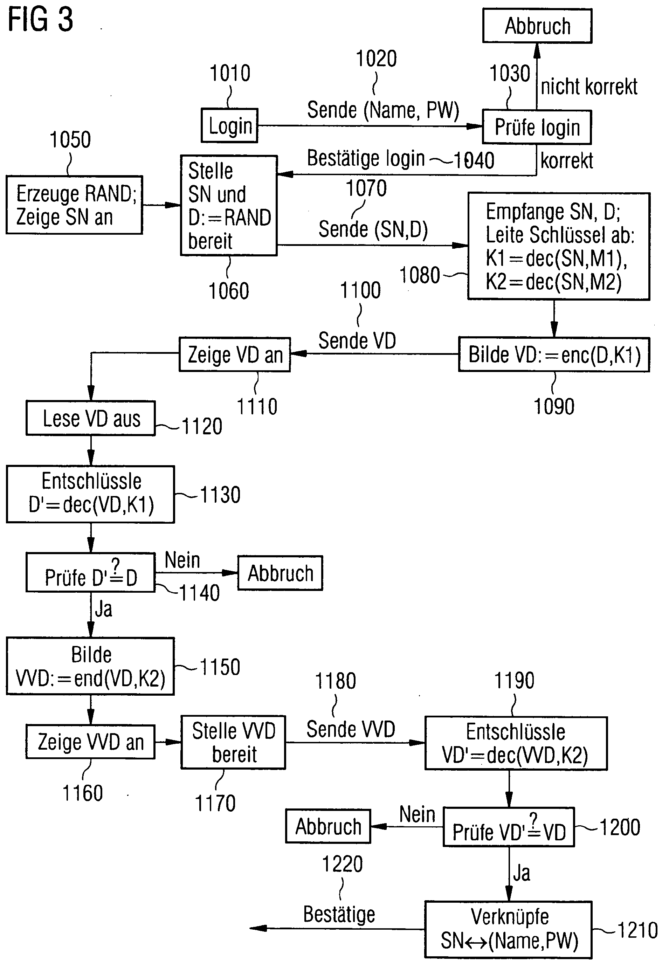

Eine bevorzugte Ausführungsform des Personalisierungsverfahrens ist in Figur 3 beschrieben. Ein Nutzer meldet sich in einem ersten Schritt 1010 bei dem Anwendungssystem 300 an, in dem er seine Kennungsdaten, beispielsweise Name und Passwort (PW), in Schritt 1020 an das Anwendungssystem 300 sendet, welches in Schritt 1030 diese Kennungsdaten mittels in dem Anwendungssystem 300 bereits vorliegenden Kennungsdaten vergleicht und bei Übereinstimmung in Schritt 1040 dem Nutzer ein korrektes Anmelden bestätigt.

Der OTP-Generator 10 erzeugt in Schritt 1050 eine Pseudozufallszahl RAND und zeigt als Identifikationsdaten eine Seriennummer SN an, die in Schritt 1060 dem Kommunikationsgerät 200 jeweils über die Tastatur 220 bereitgestellt werden und von diesem in Schritt 1070 als SN und D:= RAND an das Anwendungssystem 300 gesendet werden.

Dort empfangen leitet das Anwendungssystem 300 in Schritt 1080 aus der Seriennummer SN und mittels zweier dem Anwendungssystem 300 vorliegender geheimer Hauptschlüssel M1 und M2 die geheimen Schlüssel K1 und K2 ab und bildet anschließend in Schritt 1090 mittels K1 erste verschlüsselte Daten VD und sendet diese in Schritt 1100 an das Kommunikationsgerät 200.

Das Kommunikationsgerät 200 zeigt die empfangenen ersten verschlüsselten Daten VD mittels der Monitoreinrichtung 210 in Schritt 1110 an, von wo aus diese Daten von dem OTP-Generator 10 mittels der optischen Eingabeeinrichtung 50 in Schritt 1120 ausgelesen werden.

Der OTP-Generator 10 verifiziert die empfangenen ersten verschlüsselten Daten VD, indem diese in Schritt 1130 durch die Kryptographieeinrichtung 70 mittels des Schlüssels K1 zu D' entschlüsselt werden. Optional können diese Daten D' zur nochmaligen Prüfung durch den Nutzer auf der Anzeigeeinrichtung 60 angezeigt werden. Die Verifikationsapplikation 45 vergleicht in Schritt 1140 nun D' mit der zuvor als Referenzdatum D (also der Pseudozufallszahl RAND) gespeicherten Daten.

Bei Gleichheit bildet die Kryptographieeinrichtung 70 in Schritt 1150 zweite verschlüsselte Daten WD, indem die ersten verschlüsselten Daten VD mittels des Schlüssels K2 verschlüsselt werden. Diese Daten WD werden mittels der Anzeigeeinrichtung in Schritt 1160 angezeigt und in Schritt 1170 dem Kommunikationssystem 200 über die Tastatur 220 bereitgestellt und von diesem in Schritt 1180 an das Anwendungssystem 300 gesendet.

Zur Verifikation entschlüsselt das Anwendungssystem 300 in Schritt 1190 die empfangenen zweiten verschlüsselten Daten WD mittels des Schlüssels K2 zu VD' und prüft in Schritt 1200, ob die derart erhaltenen Daten VD' mit den in Schritt 1090 berechneten und gespeicherten Daten VD übereinstimmen.

Ist dies der Fall, werden die Kennungsdaten (Name, PW) des Nutzers in Schritt 1210 mit den Identifikationsdaten SN des OTP-Generators 10 verknüpft, wodurch der OTP-Generator 10 für den Nutzer bei dem Anwendungssystem 300 personalisiert ist. In Schritt 1220 sendet das Anwendungssystem 300 eine Bestätigungsnachricht, um den Nutzer über die erfolgreiche Personalisierung zu informieren.

## Patentansprüche

1. Verfahren zum Personalisieren eines One-Time-Password OTP-Generators (10) auf einen Nutzer bei einem Anwendungssystem (300), umfassend die Schritte:
- Empfangen (1030; 1080) zumindest von Kennungsdaten (Name, PW) des Nutzers und den OTP-Generator (10) identifizierenden Identifikationsdaten (SN) durch das Anwendungssystem (300);
- Bilden (1090) von ersten verschlüsselten Daten (VD) aus durch das Anwendungssystem (300) empfangenen Daten (D) mittels eines auf dem Anwendungssystem (300) vorliegenden ersten geheimen Schlüssels (K1), Senden (1100) zumindest dieser ersten verschlüsselten Daten (VD) an den OTP-Generator (10) und Verifizieren (1130,1140) der empfangenen ersten verschlüsselten Daten (VD) mittels des auf dem OTP-Generator (10) vorliegenden ersten geheimen Schlüssels (K1);
- Bilden (1150) von zweiten verschlüsselten Daten (WD) aus durch den OTP-Generator (10) empfangenen Daten (VD) mittels eines auf dem OTP-Generator (10) vorliegenden zweiten geheimen Schlüssels (K2), sofern die ersten verschlüsselten Daten (VD) erfolgreich verifiziert worden sind, Senden (1180) zumindest dieser zweiten verschlüsselten Daten (WD) an das Anwendungssystem (300) und Verifizieren (1190, 1200) der empfangenen zweiten verschlüsselten Daten (WD) mittels des auf dem Anwendungssystem (300) vorliegenden zweiten geheimen Schlüssels (K2);
- Verknüpfen (1210) der Kennungsdaten (Name, PW) und der Identifikationsdaten (SN) in dem Anwendungssystem (300), sofern die zweiten verschlüsselten Daten (WD) erfolgreich verifiziert worden sind, wobei das Anwendungssystem (300) den ersten geheimen Schlüssel (K1) mittels eines auf dem Anwendungssystem (300) vorliegenden ersten geheimen Hauptschlüssels (M1) und den zweiten geheimen Schlüssel (K2) mittels eines auf dem Anwendungssystem (300) vorliegenden zweiten geheimen Hauptschlüssel (M2) jeweils aus den Identifikationsdaten (SN) ableitet, wobei ein mit dem Anwendungssystem (300) verbundenes Kommunikationsgerät (200) für das Anwendungssystem (300) bestimmte Daten des OTP-Generators (10) an das Anwendungssystem (300) sendet und für den OTP-Generator (10) bestimmte Daten des Anwendungssystems (300) von dem Anwendungssystem (300) empfängt, wobei von dem Kommunikationsgerät (200) empfangene, für den OTP-Generator (10) bestimmte Daten des Anwendungssystems (300) auf einer Monitoreinrichtung (210) des Kommunikationsgeräts (200) angezeigt werden und mittels einer optischen Eingabeeinrichtung (50) des OTP-Generators (10) von der Monitoreinrichtung (210) ausgelesen werden, wobei die auf der Monitoreinrichtung (210) angezeigten Daten mittels eines CCD-Zeilensensors oder eines optisch eindimensionalen Sensors als optische Eingabeeinrichtung (50) des OTP-Generators (10) ausgelesen werden, wobei für das Anwendungssystem (300) bestimmte Daten des OTP-Generators (10) auf einer Anzeigeeinrichtung (60) des OTP-Generators (10) angezeigt werden und über eine Eingabeeinrichtung (220) des Kommunikationsgeräts (200) dem Kommunikationsgerät (200) zum Senden an das Anwendungssystem (300) bereitgestellt werden, wobei der erste geheime Schlüssel (K1) und der zweite geheime Schlüssel (K2) voneinander verschiedene kryptographische Schlüssel und der erste geheime Hauptschlüssel (M1) und der zweite geheime Hauptschlüssel (M2) verschiedene kryptographische Hauptschlüssel sind und die zweiten verschlüsselten Daten (WD) durch Verschlüsseln der durch den OTP-Generator (10) empfangenen, mit dem ersten geheimen Schlüssel (K1) verschlüsselten ersten verschlüsselten Daten (VD) mittels des zweiten geheimen Schlüssels (K2) gebildet werden, wobei als zweiter geheimer Schlüssel (K2) ein eindeutig nur dem OTP-Generator (10) zuzuordnender kryptographischer Schlüssel verwendet wird, **dadurch gekennzeichnet, dass** das Anwendungssystem (300) zusätzlich zu den Identifikationsdaten (SN) eine von dem OTP-Generator (10) generierte Pseudozufallszahl (D; RAND) empfängt und das Anwendungssystem (300) die ersten verschlüsselten Daten (VD) aus der Pseudozufallszahl (D; RAND) bildet.

2. Verfahren nach Anspruch 1, **dadurch gekennzeichnet, dass** das Anwendungssystem (300) die Kennungsdaten (Name, PW) des Nutzers von dem Kommunikationsgerät (200) empfängt.

3. Verfahren nach einem der Ansprüche 1 bis 2, **dadurch gekennzeichnet, dass** der OTP-Generator (10) auf einen Nutzer bei einem Online-Banking-System als Anwendungssystem (300) personalisiert wird.

## Claims

1. A method for personalizing a one-time password OTP generator (10) to a user in an application system (300), comprising the steps of:
- receiving (1030; 1080) at least of identity data (name, PW) of the user and identification data (SN) identifying the OTP generator (10) by the application system (300);
- forming (1090) of first encrypted data (VD) from data (D) received by the application system (300) by means of a first secret key (K1) present on the application system (300), sending (1100) at least said first encrypted data (VD) to the OTP generator (10) and verifying (1130, 1140) the received first encrypted data (VD) by means of the first secret key (K1) present on the OTP generator (10);
- forming (1150) of second encrypted data (VVD) from data (VD) received by the OTP generator (10) by means of a second secret key (K2) present on the OTP generator (10), if the first encrypted data (VD) have been verified successfully, sending (1180) at least said second encrypted data (VVD) to the application system (300) and verifying (1190, 1200) the received second encrypted data (WD) by means of the second secret key (K2) present on the application system (300);
- associating (1210) the identity data (name, PW) and the identification data (SN) in the application system (300), if the second encrypted data (WD) have been verified successfully,
wherein the application system (300) derives, in each case from the identification data (SN), the first secret key (K1) by means of a first secret master key (M1) present on the application system (300) and the second secret key (K2) by means of a second secret master key (M2) present on the application system (300), wherein a communication device (200) connected with the application system (300) sends data of the OTP generator (10) intended for the application system (300) to the application system (300) and receives data of the application system (300) intended for the OTP generator (10) from the application system (300), wherein data of the application system (300) intended for the OTP generator (10) received from the communication device (200) are displayed on a monitor device (210) of the communication device (200) and are read from the monitor device (210) by means of an optical input device (50) of the OTP generator (10), wherein the data displayed on the monitor device (210) are read by means of a CCD line sensor or an optically one-dimensional sensor as optical input device (50) of the OTP generator (10), wherein data of the OTP generator (10) intended for the application system (300) are displayed on a display device (60) of the OTP generator (10) and are provided to the communication device (200) via an input device (220) of the communication device (200) for sending to the application system (300), wherein the first secret key (K1) and the second secret key (K2) are mutually different cryptographic keys and the first secret master key (M1) and the second secret master key (M2) are different cryptographic master keys and the second encrypted data (WD) are formed by encrypting the first encrypted data (VD) encrypted with the first secret key (K1) received by the OTP generator (10) by means of the second secret key (K2), wherein as second secret key (K2) a cryptographic key is used that can be assigned uniquely exclusively to the OTP generator (10), **characterized in that** the application system (300) receives, in addition to the identification data (SN), a pseudo-random number (D; RAND) generated by the OTP generator (10), and the application system (300) forms the first encrypted data (VD) from the pseudo-random number (D; RAND).

2. The method according to claim 1, **characterized in that** the application system (300) receives the identity data (name, PW) of the user from the communication device (200).

3. The method according to any of the claims 1 to 2, **characterized in that** the OTP generator (10) is personalized to a user in an online banking system as application system (300).

## Revendications

1. Procédé de personnalisation d'un générateur de mot de passe à usage unique OTP (10) relativement à un utilisateur dans un système d'application (300), comprenant les étapes:
- réception (1030; 1080), par le système d'application (300), d'au moins des données d'identifiant (nom, PW) de l'utilisateur et de données d'identification (SN) identifiant le générateur OTP (10);
- constitution (1090) de premières données codées (VD) à partir de données (D) reçues par le système d'application (300), au moyen d'une première clé secrète (K1) se trouvant sur le système d'application (300), envoi (1100) d'au moins ces premières données codées (VD) au générateur OTP (10), et vérification (1130, 1140) des premières données codées (VD) reçues, au moyen de la première clé secrète (K1) se trouvant sur le générateur OTP (10);
- constitution (1150) de deuxièmes données codées (WD) à partir de données (VD) reçues par le générateur OTP (10), au moyen d'une deuxième clé secrète (K2) se trouvant sur le générateur OTP (10), dans la mesure où les premières données codées (VD) ont été vérifiées avec succès, envoi (1180) d'au moins ces deuxièmes données codées (VVD) au système d'application (300), et vérification (1190, 1200) des deuxièmes données codées (WD) reçues, au moyen de la deuxième clé secrète (K2) se trouvant sur le système d'application (300);
- liaison (1210) des données d'identifiant (nom, PW) et des données d'identification (SN) dans le système d'application (300), dans la mesure où les deuxièmes données codées (VVD) ont été vérifiées avec succès,
cependant que le système d'application (300) déduit la première clé secrète (K1) au moyen d'une première clé secrète principale (M1) se trouvant sur le système d'application (300) et déduit la deuxième clé secrète (K2) au moyen d'une deuxième clé secrète principale (M2) se trouvant sur le système d'application (300), respectivement à partir de données d'identification (SN), cependant qu'un appareil de communication (200) relié au système d'application (300) envoie au système d'application (300) des données du générateur OTP (10) destinées au système d'application (300) et reçoit de la part du système d'application (300) des données du système d'application (300) destinées au générateur OTP (10), cependant que des données du système d'application (300) reçues par l'appareil de communication (200) et destinées au générateur OTP (10) sont affichées sur un dispositif d'écran (210) de l'appareil de communication (200) et sont lues depuis le dispositif d'écran (210) au moyen d'un dispositif optique d'entrée (50) du générateur OTP (10), cependant que les données affichées sur le dispositif d'écran (210) sont lues au moyen d'un capteur linéaire à CCD ou d'un capteur optiquement unidimensionnel en tant que dispositif optique d'entrée (50) du générateur OTP (10), cependant que des données du générateur OTP (10) destinées au système d'application (300) sont affichées sur un dispositif d'affichage (60) du générateur OTP (10) et sont, par un dispositif d'entrée (220) de l'appareil de communication (200), mises à disposition de l'appareil de communication (200) pour l'envoi au système d'application (300), cependant que la première clé secrète (K1) et la deuxième clé secrète (K2) sont des clés cryptographiques différentes l'une de l'autre, et la première clé secrète principale (M1) et la deuxième clé secrète principale (M2) sont des clés cryptographiques principales différentes, et les deuxièmes données codées (WD) sont constituées par codage, au moyen de la deuxième clé secrète (K2), des premières données codées (VD) reçues par le générateur OTP (10) et codées avec la première clé secrète (K1), cependant que, en tant que deuxième clé secrète (K2), c'est une clé cryptographique à affecter univoquement uniquement au générateur OTP (10) qui est utilisée, **caractérisé en ce que** le système d'application (300) reçoit, en plus des données d'identification (SN), un nombre pseudo-aléatoire (D; RAND) généré par le générateur OTP (10), et **en ce que** le système d'application (300) constitue à partir du nombre pseudo-aléatoire (D; RAND) les premières données codées (VD).

2. Procédé selon la revendication 1, **caractérisé en ce que** le système d'application (300) reçoit les données d'identifiant (nom, PW) de l'utilisateur de la part de l'appareil de communication (200).

3. Procédé selon une des revendications 1 ou 2, **caractérisé en ce que** le générateur OTP (10) est personnalisé relativement à un utilisateur dans un système de banque en ligne en tant que système d'application (300).
